Europäisches Patentamt

(19) European Patent Office

Office européen des brevets

(11) Publication number: **0 256 176**
**A1**

## (12) EUROPEAN PATENT APPLICATION

(21) Application number: 86306101.6

(22) Date of filing: 07.08.86

(51) Int. Cl.⁴: **B42D 15/02** , **G07C 9/00** , **G09C 5/00**

(43) Date of publication of application:
**24.02.88 Bulletin 88/08**

(84) Designated Contracting States:
**BE DE FR LU SE**

(71) Applicant: **KENRICK & JEFFERSON LIMITED**
**High Street**
**West Bromwich B70 8NB(GB)**

(72) Inventor: **Hackwood, Roger**
**23A Foxles Road Hayley Green**
**Halesowen B10 8NB West Midlands(GB)**
Inventor: **Howles, Geoffrey Leslie**
**10 Charlemont Gardens**
**Walsall WS5 3RD West Midlands(GB)**

(74) Representative: **Prutton, Roger et al**
**MARKS & CLERK Alpha Tower Suffolk Street**
**Queensway**
**Birmingham B1 1TT(GB)**

(54) Security documents.

(57) A security document for example a bank pass book has printed on one portion thereof an area 113 containing scrambled indicia and on another portion a transparent area 112 configured as a reading screen for unscrambling the indicia. These two portions are arranged so as to be superimpsable to enable the indicia to be read.

Also disclosed is a security document which has an area consisting of a regularly lined image of the indicia on a regularly lined background the lines of the background being displaced laterally relative to the lines of the indicia, together with an overall random pattern or "noise". Photographic and computer methods of generating the scrambled indicia are disclosed.

Fig.11.

Fig.12.

## SECURITY DOCUMENTS

This invention relates to security documents such as bank pass books.

One object of the invention is to provide such a security document with means to enable its authenticity to be checked readily.

In accordance with the invention there is provided a security document having printed on one portion thereof an area of scrambled indicia and having on another portion thereof a transparent area configured as a reading screen for unscrambling said indicia, said one portion and said other portion being so disposed on the document that the other portion can be superimposed on said one portion to enable the indicia to be read.

In the case of a bank pass book said other portion may comprise a transparent strip attached to one marginal edge of the front cover of the book, whereas said one portion can be an area inside the rear cover of the book or on a page of the book. Alternatively the transparent area may form a window in the front cover of the book with the other portion on the first page of the book.

Various prior suggestions have been made for printing scrambled indicia. for example, the indicia may be photographed through a lenticular screen and a similar lenticular screen may be used to read the indicia. If this system were used for a bank pass book it would be necessary to configure the said other portion as a lenticular screen.

it has also been proposed to scramble indicia by breaking up the indicia into a number of lines and replacing some of these lines by lines of random pattern or noise. This can be done photographically with a line screen (see U.S Patent No. 2952080) or by optical scanning and subsequent data processing. Reading is effected by means of a line screen which is positioned on the printed scrambled indicia to obliterate the lines containing noise.

However, a preferred method of scrambling the indicia produces a regularly lined image of the indicia on a regularly lined background, the lines in the background being displaced laterally relative to the lines in the indicia, together with an overall random pattern or "noise". the overall pattern may consist of gaps in the lines or added "black" in the spaces between the lines. The lines may be straight, wavy or otherwise regularly shaped. The reading screen used is a regularly lined screen which can be used to obliterate the lines of the background, in which case the indicia appear "darker" than the background, or to obliterate the spaces between the background lines, in which case the indicia appear "lighter" than the lines.

Such scrambled indicia and the method of producing them to be described hereinafter form another aspect of the present invention which is not limited to use in a security document as devined above, but which is also useful in other applications where the reading screen does not form a part of the security document.

The scrambled indicia may be produced photographically utilizing positive and negative versions of the indicia, positive and negative versions of the required line screen and a random pattern or noise screen. The required image is produced by a multiple contact exposure technique in which a first exposure is made through one version of the indicia, and one version of the line screen simultaneously, a second exposure is made through the other versions of the indicia and line screen and a third exposure is made through the random pattern or noise screen. The resulting image may be reversed by contact printing again to provide black lines with random gaps.

Alternatively it is possible to generate the scrambled indicia by electronic means, using a line scanner to scan the indicia and a computer controlled dot printer which prints dots in lines. These lines of dots are alternately reversed in phase (i.e. dots apear in one line only where the indicia are and in the next line only where there are no indicia) and dots are randomly omitted or added. Such addition or omission of dots may be effected in accordance with data already derived by scanning a random pattern or noise screen or by software controlled random number generation.

In the accompanying drawings:

Figures 1 to 15 illustrate the preferred photomechanical method of generating scrambled indicia,

Figure 16 shows a modification of the above method,

Figure 17 shows a document, namely a bank pass book, to which an example of the invention is applied; and

Figure 18 shows the pass book closed to superimpose a reading screen on the scrambled indicia so as to reveal the indicia.

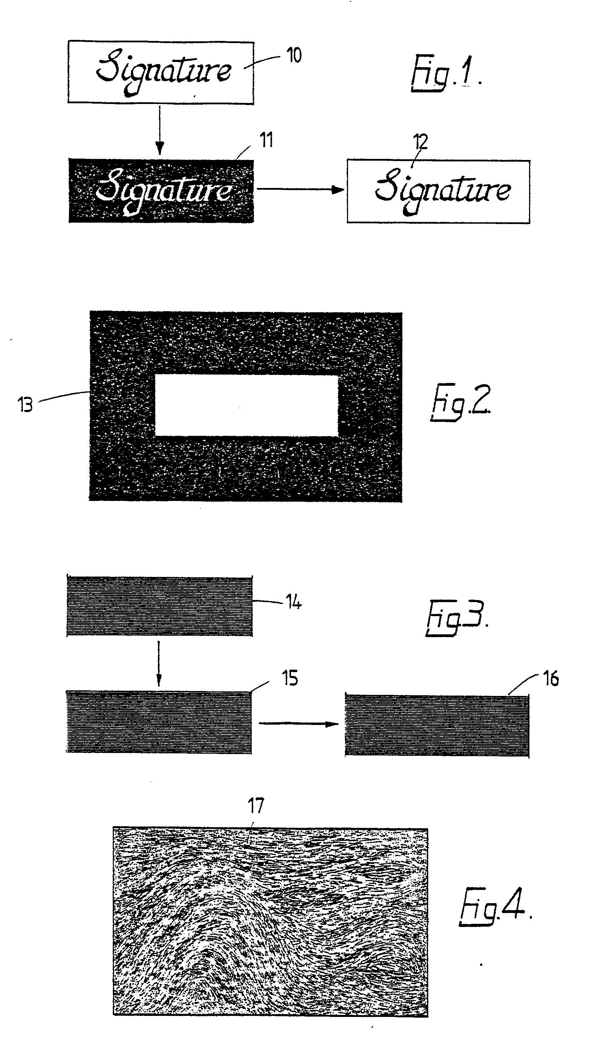

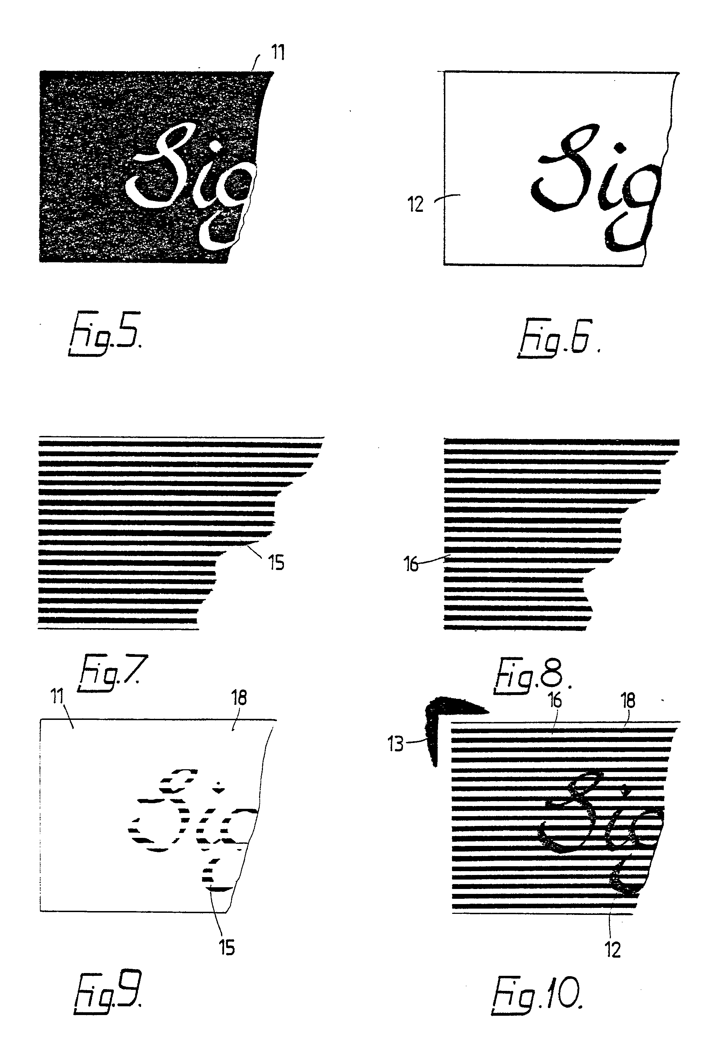

Figures 1 to 15 show the preferred scrambling method as applied to the srambling of a signature for use, for example in a personal cheque book or the like. The original signature 10 is photographed to produce a negative version 11 of the signature which is developed and then contact exposed onto another sheet of film to provide a positive version 12. these negative and positive versions are made on transparent film with the usual provision for accurate registration of images and, if so registered together, will provide a totally opaque result. figures 5 and 6 show parts of the negative and positive versions to a larger scale.

Figure 2 shows a mask 13 which is used in the process, such mask having a transparent area large enough to contain the signature.

Figure 3 illustrates the production of positive and negative line masks 15 and 16 from an original line pattern 14. Again the line masks 15 and 16 are produced on transparent material and, when superimposed in register provide a completely opaque result. Figures 7 and 8 show parts of the line masks to a larger scale.

Figure 4 shows a random pattern or noise screen 17 which may be a photographic reproduction of wood grain, leather or a similar "random" pattern.

To produce the scrambled signature a triple contact exposure is made on another piece of film from the transparencies described above The first exposure is made through the negative version 11 of the signature, and the negative line mask 15 simultaneously. Figure 9 shows the latent image which results. The second exposure is made through the positive version 12 of the signature, and the positive line mask 16 simultaneously together with the mask is to limit the area of the image. Figure 8 shows the latent image which results.

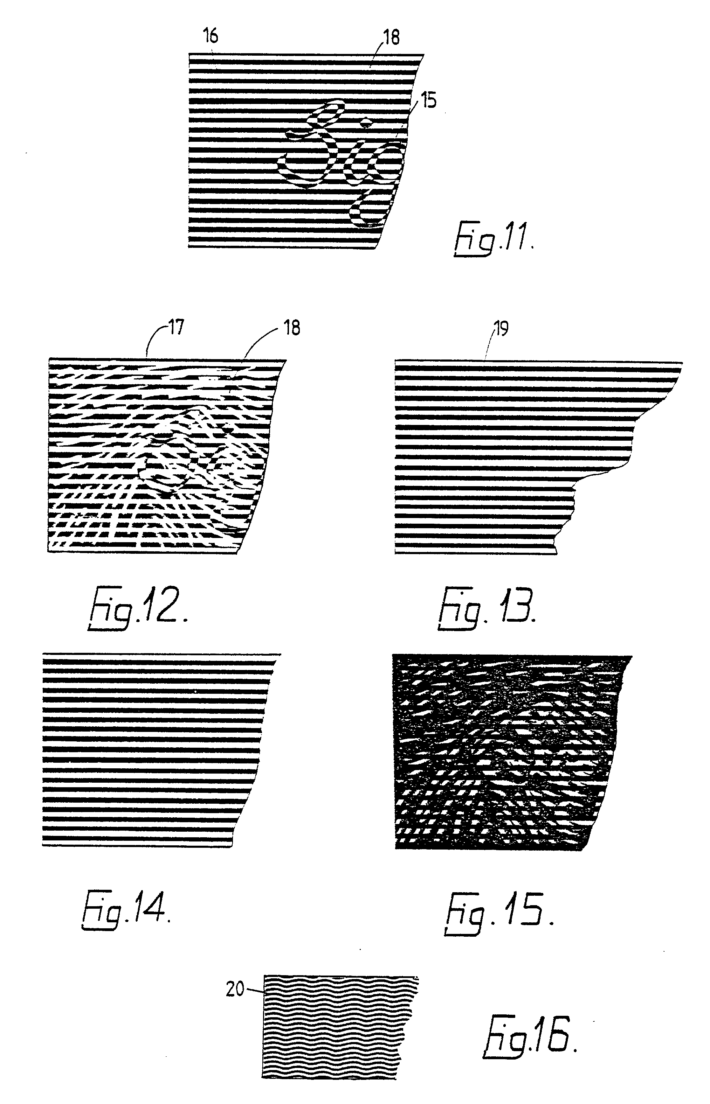

Since the various transparencies have been carefully registered (by well known means) the various images register correctly. Figure 11 shows the latent double image which is produced this image comprising a lined version of the signature on a lined background with the lines on the signature out of phase (i.e. displaced laterally) with those on the background.

Finally a third exposure is made through the screen 17 with the mask 13, the film is developed and then another contact transparency is made from this film. The resulting image is as shown in Figure 12. As will be seen the opaque lines of the image are interrupted by an overall random or noise pattern.

For reading the scrambled signature a reading screen 10 having lines identical to those used for production of the line mask is employed. This is shown in figure 13. Figure 14 shows the appearance which results if the sreen 19 is laid on the scrambled signature with the lines of screen 19 coinciding with the background lines. the signature lines now appear clearly on a lined background. Figure 15 shows the effect of aligning the screen 19 so that the lines thereon cover the spaces between the lines of the background of the scrambled signature. The signature now appears "lighter" than the background although it is somewhat obscured by background noise.

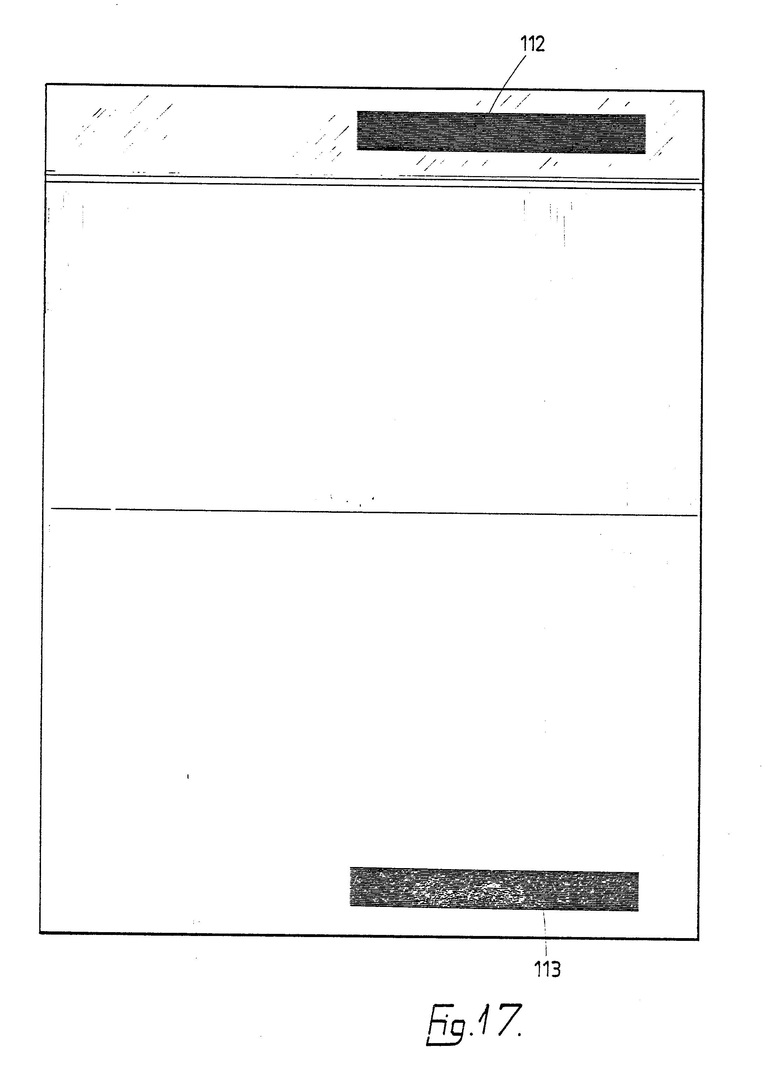

Figure 16 shows a modified line mask design 20 in which the regularly spaced straight lines of Figure 3 are replaced by regularly spaced, regularly wavy lines. Where this design is used, the reading screen must be similarly designed.

The final image shown in Figure 17 could also be produced using a double contact exposure technique involving the same transparencies 11, 12, 15 and 16 and the screen 17. In this case the screen 17 is placed over the unexposed film for both exposures, the first being made through transparencies 11 and 15 and the second through transparencies 12 and 16 with mask 13.

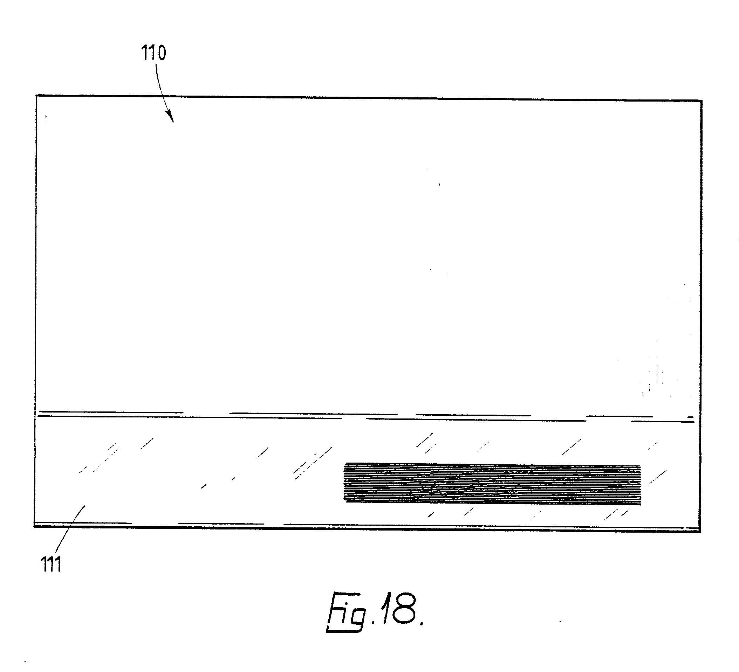

Referring now to Figures 17 and 18 there is shown therein a bank pass book which has a cover 110 one marginal edge of the from of which has a transparent strip 111 attached to it. Printed on this transparent strip is a reading screen 112 consisting of opaque straight lines. Inside the back cover or on a page at the back of the book, scrambled indicia 113 are printed, preferably produced from a printing plate made from a photographic image like that shown in Figure 12, the reading screen 112 having the appropriate characteristics for unscrambling the scrambled indicia.

When the book is closed, the screen 113 overlies the scrambled indicia and, as shown in Figure 18, which is a direct reproduction of an actual book, the indicia are thereby made visible.

Other methods (discussed above) may be used for producing the scrambled indicia. Furthermore the scrambled indicia and the reading screen may be so disposed that they do not become aligned when the book is merely closed. for example, where the scrambled indicia are printed inside the rear cover, there may be a page overlying this which separates the scrambled indicia and the reading screen. This intervening page will then need to be folded to permit unscrambling of the scrambled indicia.

The scrambled indicia may be printed in an ink which is normally invisible, but which becomes visible when irradiated with ultra-violet radiation or other radiation.

## Claims

1. A security docuent having marked thereon an area consisting of a regularly lined image of indicia on a regularly lined background, the lines of the background being displaced laterally relative to the lines in the indicia, together with an overal random pattern or "noise".

2. A seccurity document as claimed in Claim 1 in which the overal random pattern is provided in the form of random gaps in the lines.

3. A security document as claimed in Claim 1 in which the overall random pattern is provided in the form of random images superimpsed on the spaces between the lines.

4. A security document as claimed in any preceding claim in which the lines are straight and parallel and of width equal to the width of the spaces between them.

5. A method of producing scrambled indicia for printing on a security document as claimed in Claim 1 comprising photographically producing positive and negative transparencies of the indicia, positive and negative transparencies of a line screen and a transparency of the random pattern and photographically printing on the same sheet of photographic material registered images of (a) one transparency of the indicia through one transpareny of the line screen, (b) the other transparency of the indicia through the other transparency of the line screen and (c) the transparency of the random pattern.

6. A method as claimed in Claim 5 in which the line screen consists of straight lines of width equal to the width of the spaces between the lines.

7. A method of producing scrambled indicia for printing on a security document as claimed in Claim 1 comprising line sanning the indicia to be scrambled and controlling the operation of a dot printed in accordance with the line san data so as to print lines of dots of alternate phase such that in one line dots appear only where the line scan indicates the presence of indicia snd in the next line only where the indicia are absent, dots being randomly added or omitted to create said overal random pattern.

8. A method as claimed in claim 7 in which the addition or omission of dots is effected in accordance with data previously derived by line scanning or random pattern or noise scan.

9. A method as claimed in Claim 7 in which the addition or omission of dots is effective by means of software controlled random number generation.

10. A security document having printed on one portion thereof an area of scrambled indicia and having on another portion thereof a transparent area configured as a reading sreen for unscrambling said indicia, said one portion and said other portion being so disposed on the document that the other portion can be superimposed on said one portion to enable the indicia to be read.

11. A security document as claimed in Claim 10 in the form of a book in which said other portion comprises a transparent strip attached to one marginal edge of a front cover of the book, said one portion comprising an area on the inside of a rear cover of the book or on a page of the book.

12. a security document as claimed in Claim 10 in the form of a book in which said other portion comprises a window in a cover of the book and said one portion is on a page of the book.

13. A security document as claimed in any of claims 1-4 and also in accordance with any of claims 10-12.

14. A security document substantially as hereinbefore described with reference to and as shown in Figures 17 and 18 of the accompanying drawings.

15. A method of scrambling indicia for printing on a security document substantially as hereinbefore described with reference to Figures 1 to16.

Fig.1.

*Signature* 10

*Signature* 11

*Signature* 12

13

Fig.2.

14

15

16

Fig3.

17

Fig.4.

Fig.5.

Fig.6.

Fig.7.

Fig.8.

Fig.9.

Fig.10.

Fig.11.

Fig.12.

Fig.13.

Fig.14.

Fig.15.

Fig.16.

112

113

Fig.17.

110

111

Fig.18.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-2 952 080 (AVAKIAN et al.)<br>* Figures 1-8; column 2, lines 19-46; column 3, line 25 - column 4, line 68; column 5, line 44 - column 6, line 51; claims 1-12 * | 10-12 | B 42 D 15/02<br>G 07 C 9/00<br>G 09 C 5/00 |
| D,A | | 1-9,13 | |
| E | GB-A-2 172 850 (KENRICK & JEFFERSON)<br>* Whole document * | 1-13 | |
| A | FR-A-1 379 154 (TELEREGISTER-CORP.)<br>* Page 2, right-hand column, line 4 - page 3, left-hand column, line 6; figures 1,3,5; claims 1,3 * | 1-8,10<br>-13 | |
| A | US-A-3 279 095 (CARLSON)<br>* Column 1, line 58 - column 2, line 23; column 7, line 51 - column 9, line 16; figures 1-10; claims 1-10 * | 1-13 | TECHNICAL FIELDS SEARCHED (Int. Cl.4)<br><br>G 07 C<br>B 42 D<br>G 09 C |
| A | US-A-3 914 877 (HINES)<br><br>* Abstract; figure 2; column 2, lines 25-59; column 6, line 32 - column 10, line 15; claims 1-5 * | 1-3,5-<br>8 | |

--- -/-

The present search report has been drawn up for all claims

| Place of search | Date of completion of the search | Examiner |
|---|---|---|
| THE HAGUE | 23-04-1987 | GUIVOL,O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl.4) |
|---|---|---|---|
| A | US-A-3 609 035  (NISANORI-ATAKA) * Abstract; figures 4,5; claims 1-3; column 1, line 31 - column 2, line 13 * | 1,5-8 | |
| A | US-A-3 969 830  (GRASHAM) * Abstract; figures 1,2; column 1, line 38 - column 4, line 15; claims 1-22 * | 1,5,10 | |

TECHNICAL FIELDS
SEARCHED (Int. Cl.4)

The present search report has been drawn up for all claims

| Place of search | Date of completion of the search | Examiner |
|---|---|---|
| THE HAGUE | 23-04-1987 | GUIVOL,O. |